# EUROPEAN PATENT SPECIFICATION

(11) **EP 2 962 155 B1**
(45) Date of publication and mention of the grant of the patent: **06.04.2022**
(21) Application number: 14712217.0
(22) Date of filing: 28.02.2014
(51) Int. Cl.: G02C 7/02, G02B 3/00, B24B 13/005

(54) **OPTICAL LENS MEMBER COMPRISING A SUB-SURFACE REFERENCING ELEMENT**
OPTISCHES LINSENELEMENT MIT EINEM REFERENZELEMENT UNTER DER OBERFLÄCHE
PIÈCE DE LENTILLE OPTIQUE COMPRENANT UN ÉLÉMENT DE RÉFÉRENCEMENT DE SOUS-SURFACE

(30) Priority: 01.03.2013 EP 13305239
(43) Date of publication of application: 06.01.2016
(73) Proprietor: Essilor International, 94220 Charenton-le-Pont (FR)
(72) Inventor: DUBOIS, Frédéric, F-94220 Charenton-Le-Pont (FR); MAURICE, Sébastien, F-94220 Charenton-Le-Pont (FR)
(74) Representative: Cabinet Novitech
(86) International application number: PCT/EP2014/053926
(87) International publication number: WO 2014/131879

(56) References cited:
- US-A1- 2001 051 490
- US-A1- 2005 046 792

## Description

The present invention relates to an optical lens member comprising at least one sub-surface referencing element, to a method of blocking such optical lens using the sub-surface referencing element and to a method of manufacturing an ophthalmic lens starting from an optical lens member according to the invention.

The discussion of the background of the invention herein is included to explain the context of the invention. This is not to be taken as an admission that any of the material referred to was published, known or part of the common general knowledge at the priority date of any of the claims.

An ophthalmic lens is typically made of plastic or glass material and generally has two opposing surfaces which co-operate to provide a required corrective prescription. When the positioning or shape of one of these surfaces with respect to the other is inaccurate, optical errors can occur.

Manufacturing of an ophthalmic lens to the required prescription requirements typically includes machining a face of a semi-finished lens. Typically, a semi-finished lens has a finished face, for example the front face and an unfinished face, for example the back face. By machining the back face of the lens to remove material, the required shape and positioning of the surface of the back face with respect to the surface of the front face for the desired corrective prescription can be generated.

The surface of the finished face of the semi-finished lens can be obtained by molding, machining or any other known means.

Conventionally, a semi-finished lens is provided with engraved markings on the finished face. The engraved markings define a reference system of the surface of the finished face of the semi-finished lens.

During manufacturing of the lens it is important that the semi-finished lens is securely maintained in an accurate position in order to prevent the generation of optical errors. Therefore, the manufacturing method comprises a blocking step during which the semi-finished lens is blocked to an insert using a blocking station.

Various materials may be employed to secure the semi-finished lens and the insert. These materials include low temperature fusible metal alloys.

The use of such materials requires that the finished face of the semi-finished lens be protected prior to being blocked. A protective tape is generally placed on the finished face prior to blocking the semi-finished lens.

The protective tape can make the viewing of the engraved markings on the finished face of the semi-finished lens difficult. Thus, it may be difficult to accurately determine the position in which the semi-finished lens is blocked. An inaccurate position of the semi-finished lens respectively the insert may create optical errors in the final lens. For the same reason it is difficult to evaluate the position of the semi-finished lens after the blocking step.

A goal of the present invention is to provide an optical lens member to be manufactured that allows increase accuracy in the positioning of both surfaces of the final ophthalmic lens. US 2005/046792 A1 discloses an optical lens member comprising an inner marking. US 2001/051490 A1 discloses a method for making an ophthalmic lens, involving blocking an optical lens element.

In accordance with a first aspect of the invention there is provided a method of blocking an optical lens member as defined in claim 1.

The optical lens member comprises first and second faces connected by an external periphery surface, a reference system identified by at least one sub-surface referencing element located between the first and second optical faces wherein the first face comprises a first optical surface having a surface design associated with the reference system.

Advantageously, having referencing element placed between the first and second optical surfaces increases the accuracy of the determination of the positions of such referencing element. Indeed, such sub-surface element can easily be visualized even when one of the optical faces of the optical lens member is recovered with a protective tape. For example, the inventors have observed that in specific lighting conditions, for example by lighting the optical lens member through the external periphery surface, the sub-surface referencing element can easily be visualized trough one of the first or second faces of the optical lens member.

Therefore, one may determine more easily and accurately the position of the referencing element and thus the reference system.

The method comprises
- an optical lens member providing step during which an optical lens member according to the invention is provided,
- a taping step during which an adhesive tape is provided on the first face of the lens member,
- a blocker providing step, during which a blocker with a blocker reference system is provided,
- an optical lens member positioning step during which the first face of the optical lens member is placed on the blocker and positioned in a blocking position with respect to the blocker reference system using the sub-surface referencing element,
- a blocking step during which the optical lens member is blocked on the blocker in a the blocking position.

Additional embodiments are defined in dependent claims.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Embodiments of the invention will now be described, by way of example only, and with reference to the following drawings in which:
- Figure 1 is a side view of an optical lens member to be manufactured;
- Figure 2 is a perspective view of a preformed surface of an optical lens member illustrating a reference system and the position parameters;
- Figure 3 is a front view of an optical lens member according to an embodiment of the invention;
- Figure 4 is a cross-section view of the optical lens member of figure 3;
- Figures 5A to 5C are schematic representation of optical lenses according to an embodiment of the invention.
- Figure 6 is a flowchart of the steps of a method according to the invention;
- Figure 7 is a cross-section view of an optical lens member having a surface placed on a blocking ring;
- Figure 8 is schematic view of an optical lens member on a blocking station; and
- Figure 9 is a planar top view of the contact surface of the blocking device and blocking plate of the blocking station of figure 8.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

In the sense of the invention the "surface design" designates the set of parameters that allow defining the surface of a face of an optical lens member. For example the surface design may comprise the surface equation, position and orientation of the surface of a face of an optical lens member, such equation, position and orientation being defined in a reference system.

In the context of the present invention the term "optical lens member" can refer to a lens blank or a semi-finished lens.

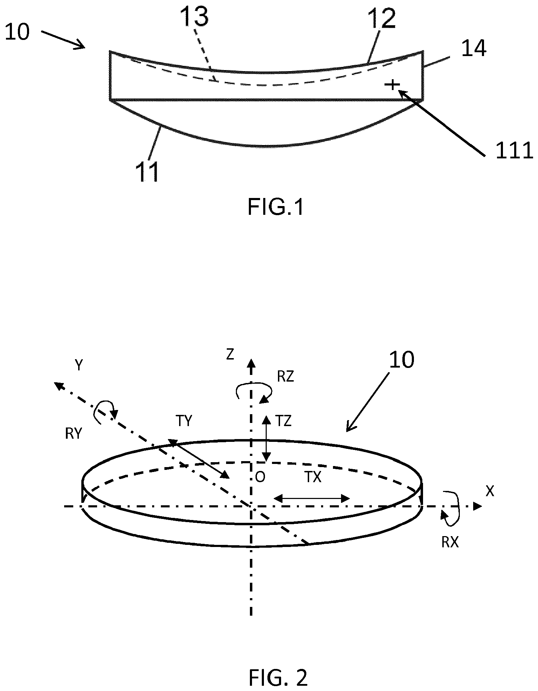

As represented on figure 1 an optical lens member 10 has a first optical face 11 and a second optical face 12. The first and second optical faces are connected by an external periphery surface 14.

The optical lens member further comprises a reference system identified by at least one sub-surface referencing element 111 located between the first and second optical faces.

In the sense of the invention, the wording "reference system identified by at least one sub-surface referencing element" is to be understood as meaning that a skilled person can easily identify the main center and the mains axis of the reference system from the position and orientation of the sub-surface referencing element.

In the example represented on figure 1, the first optical face 11 corresponds to the front face of the optical lens member. In use of the resulting finished optical lens, the front face 11 is disposed nearest the object being viewed.

The second face 12 is to be modified by a manufacturing method so as to provide for example the back face 13 of the finished optical lens, represented by the dotted line. Second face 12 is to be machined by a machining tool so that the back face 13 is orientated with respect to the reference system identified by the referencing element 111.

As represented on figure 2, the reference system comprising a main axis Z perpendicular to a main plane (X, Y) defined by two axes X, Y perpendicular to each other and to the main axis Z. The position of the lens member, in particular of each optical surface of the lens member 10 in such reference system is defined by six parameters. Among the six parameters, three are translation parameters TX, TY and TZ along each axis X, Y, and Z and three are rotation parameters RX, RY, and RZ about each of the axis X, Y, and Z.

While in this embodiment of the invention, the first face is the front face of the lens member and the second face is the back face, it will be understood, that in alternative embodiments of the invention the first face may be the back face of the lens member and the second face may be the front face.

Furthermore, while in this embodiment of the invention, the back face of the optical lens is formed by a digital surfacing manufacturing method, it will be understood, that in alternative embodiments of the invention both or either faces of the lens may be formed by a manufacturing method.

Moreover, although the face 12 to be manufactured is represented in Figure 1 as concave, it will be appreciated that this surface 13 could equally well be convex or any other curved surface.

According to an embodiment of the invention, the first face has a surface design associated with the reference system. In other words, the surface design of the first optical face of the optical lens member is oriented and positioned with respect to the reference system identified by the referencing element 111.

According to an embodiment of the invention, the first face lens is obtained by molding. The surface design of the first face is associated with a reference system identified by at least one referencing element 111 added after the molding process between the first and second surface of the optical lens member.

According to an embodiment of the invention, the first face lens is obtained by machining a surface of an optical lens blank. The surface design of the first face is associated with a reference system identified by at least one referencing element 111 present between the first and second surface of the optical lens blank.

The referencing element 111 are configured to remain at least partially in the manufactured optical lens after the second optical face has been manufactured and eventually after the optical lens has been edged so as to fit a spectacle frame. Therefore, preferably the referencing element is configured so as to be non-discernable.

In the sense of the invention, referencing elements are considers as non-discernable when they do not appear to the wearer more than the classic marking referred to in the ISO standard IS 8980-2.

As indicated in EP 1 888 635, the reference elements, although they are within the active area of the lens, should not hinder the sight of the eyeglasses wearer nor be seen by a casual observer. On the other hand, the reference elements must be readable, for instance, by technical who seeks the reference element or by an imaging vision machine. The non-discernable referencing elements can be observed under certain light conditions such as against the transition between light and shadow. This type of elements is referred herein as a non-discernable referencing element, also known as "semi-visible", "invisible", "hidden element", or similar names.

According to an embodiment of the invention, the referencing element is placed out of the wearer's principal visual field.

Alternatively, referencing element 111 are configured to vanish from the manufactured optical lens after the second optical face has been manufactured and eventually after the optical lens has been edged so as to fit a spectacle frame. In this embodiment the visibility of the referencing element can be much higher than in the previously described embodiment.

According to an embodiment of the invention, the referencing element is arranged so as to be visible only under specific lighting conditions.

The referencing element 111 may comprise local modification of the refractive index of the optical lens member. For example the referencing element comprises a set of markings. Each marking may have a dimension of a few microns, for example between 1 and 5 µm and each marking is distant of about 10 to 20 µm from the others.

Advantageously the markings are so small that they are non-discernable to the wearer of the optical lens but there sizes are sufficient for creating light scattering points in specific lighting conditions. The markings composing the set are close enough to allow identifying a shape, for example an elementary geometrical shape such as a square, a circle, a triangle, etc...

Such micro-markings may be obtained by using a by using a pulsed laser source with pulse duration within femto-second range. The light emitted by the laser source is focused within the optical lens member.

As a none limiting example, the inventors have obtained good results using an Amplitude Systemes S-Pulse laser source. The light emitted by this light source is focused within the optical lens member using a Mitutoyo objective. The laser light used had a wavelength of about 1030 nm, a pulse duration of about 650 fs, an average power of about 1W for a recurrency of 10kHz and the objective is a microscope objective 20x having an numerical aperture of about 0.4 and was placed at about 10 mm of the focusing point. Using such parameters the inventors have obtained good sub-surface markings about 1 mm below the laser side surface of the lens member. According to an embodiment, the referencing element may comprise a plurality of sub-surface markings. The sub-surface markings may define a plan PI, preferably the plan PI is perpendicular to the main axis (Z) of the reference system.

Furthermore, the sub-surface markings may be arranged to form, when highlighted, a specific shape, for example a circle or a square, preferably such shapes are in the plan PI perpendicular to the main axis (Z). Advantageously, when visualizing the referencing element trough one of the optical surfaces, a deformation of the shape defined by the sub-surface markings can easily be linked to a tilt in the position of the optical lens member about the two axes X and Y.

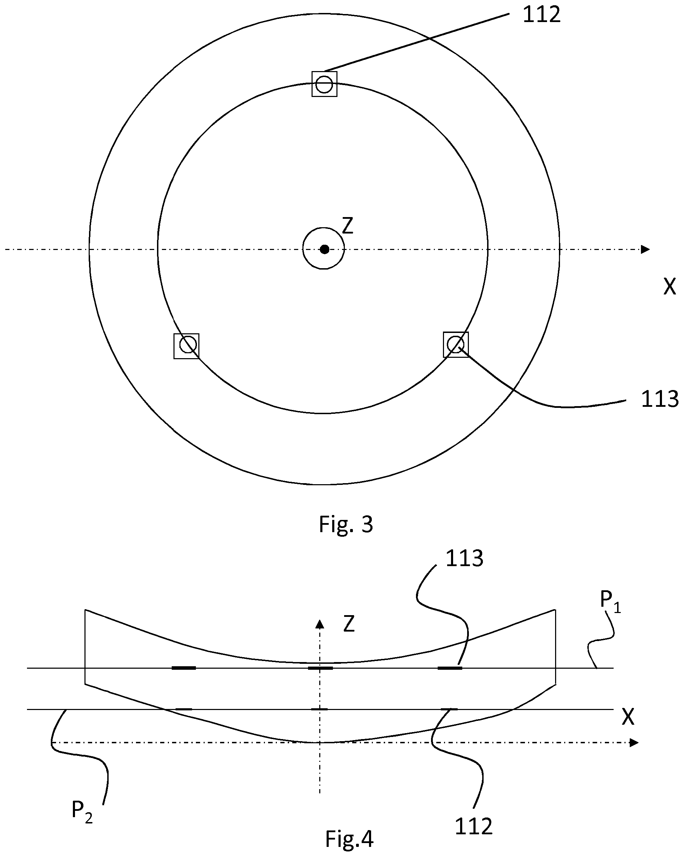

According to an embodiment of the invention illustrated on figures 3 and 4, the referencing element may comprise a first set of sub-surface markings 112, represented as squares in figure 4, and a second set of sub-surface markings 113 represented as circles in figure 4. Each set of sub-surface markings defining a plan P1 and P2. The plan P1 and P2 being different one from the other, preferably parallel one to the other and perpendicular to a specific point of the first face of the optical lens..

According to an embodiment of the invention, the set of markings are determined according to optical data and observation data.

The optical data represent the refractive properties of the optical lens member.

The optical data may represent the design of the first and second surfaces, the position of the second relative to the first surface, for example, the thickness and prism of the optical lens and the refractive index. For example, the optical data represent the prescription of the wearer.

The observation data represent observation conditions in which the first and second set of sub-surface markings are to be observed. The observation conditions may be defined by considering the observation device and the position of the manufactured lens in the observation device. The position of the manufactured optical lens in the observation device may be defined as the position of an optical lens reference system and an observation device reference system.

Advantageously, determining the relative positions of the two set of markings is rendered much easier, in particular when the observation of the first and second set of markings is realized in the observation conditions.

According to an embodiment of the invention, the sub-surface markings are arranged so as to appear at the same position in the observation conditions when the optical lens member is correctly positioned in the reference system. Therefore, in the observation condition the second and first markings appear superimposed. This simplifies the lens positioning operations prior to the blocking step.

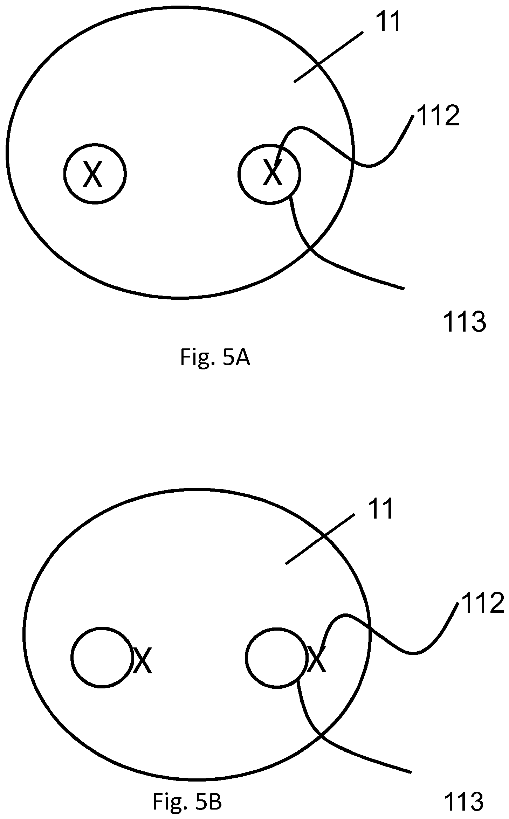

According to an embodiment of the invention illustrated on figure 5A to 5C, the sets of sub-surface markings may be determined so as to take into account a positioning error tolerance.

For example as illustrated on figure 5A, the second markings 113 may have circular shapes and be determined so as to appear centered over the first markings 112 in the observing conditions when the optical lens member is correctly positioned in the reference system. The radius of the circular shaped second markings may be determined based on an error position tolerance.

Therefore, when the positioning error of the optical lens member is greater than the error position tolerance, the first markings appear outside the second markings, as illustrated on figure 5B.

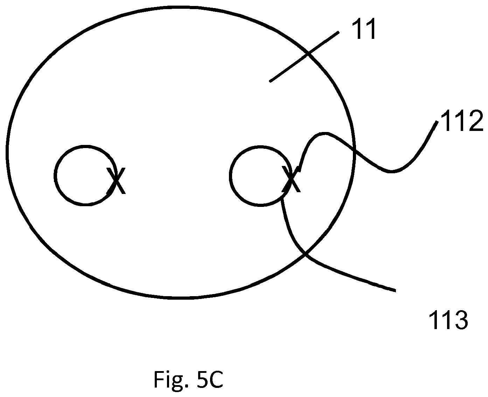

However, when the positioning error of the optical lens member is smaller than the error position tolerance, the first markings appear inside the second markings, as illustrated on figure 5C.

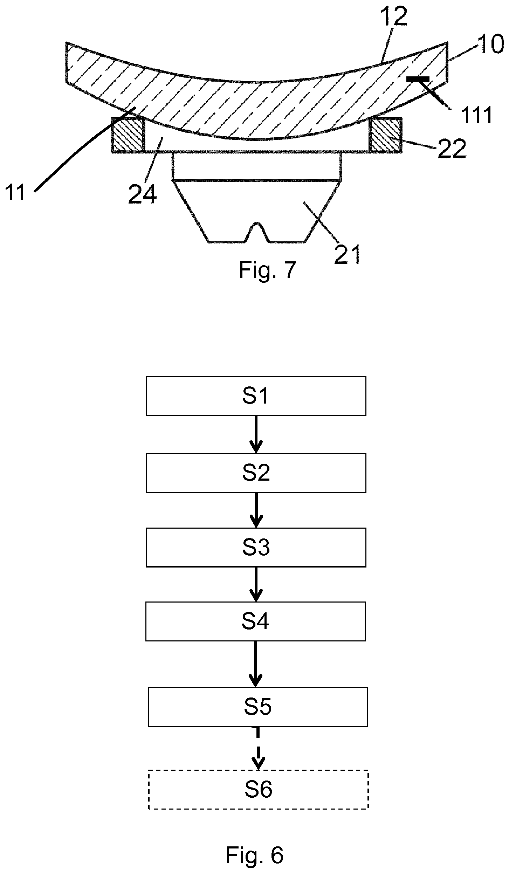

As illustrated on figure 6, the invention further relates to a method of blocking an optical lens member. The method comprises:
- an optical lens member providing step S1;
- a taping step S2;
- a blocker providing step S3;
- an optical lens member positioning step S4;
- a blocking step S5.

During the optical lens member providing step S1, an optical lens member according to the invention is provided, for example an optical lens member as described above.

During the taping step S2, an adhesive tape is provided on the first face of the lens member so as to cover at least part of the first face.

Examples of suitable adhesive tapes are given in US 6,036,013.

During the blocker providing step S3 a blocker with a blocker reference system is provided.

The optical lens is placed on the blocker and positioned in a blocking position with respect to the blocker reference system using the sub-surface reference elements during the optical lens member positioning step S4.

During the blocking step S5, the optical lens member is blocked on the blocker in a blocking position. The blocking position is determined with respect to the blocker reference system using the sub-surface referencing element.

Referring now to figure 7, a lens blocking device for blocking optical lens member 10 in the correct position for manufacturing processes may comprise an insert 21 and a blocking ring 22. Blocking cast material 24 is poured into the cavity defined by the lower surface of the optical lens member 10, the insert 21 and the blocking ring 22. The blocking cast material 24 cools to solidify in order to provide a blocker for the lens member 10 at the desired positioning for machining.

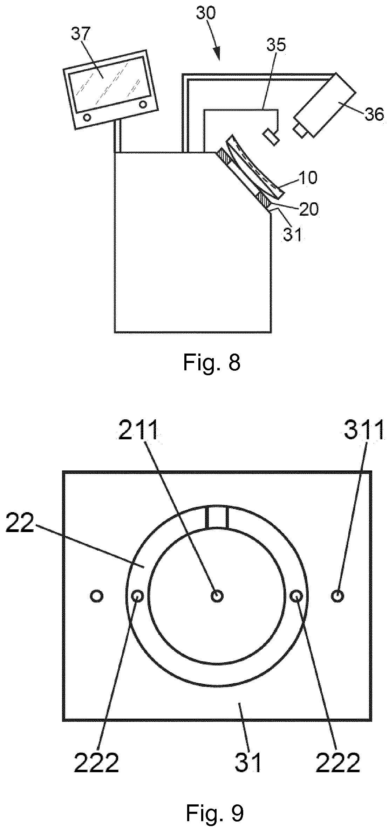

As illustrated in Figure 8, a lens blocking device 20 is part of a blocking station 30. Blocking station 30 comprises the blocking device 20 disposed on a top plate 31 of the blocking station 30 and a clamping arm 35 which may be moved from a free position to a clamping position in which it holds the optical lens member 10 in place on the blocking device 20. Blocking station 30 also includes a digital camera 36 for taking an image of the positioning of the lens member 10 on the blocking device 20, and a screen 37 for viewing the image from the digital camera 36. The lens member 10 may also be directly viewed by an operator without using the digital camera 36.

As illustrated on figure 9, the blocking device 20 is provided with blocker reference markings including alignment markings 222 provided on the blocking ring 22 and a central marking 211. In the case where an insert is provided in the center of the blocking ring, the central marking 211 may be provided on the insert. The top plate 31 of the blocking station 30 is devoted to receive a blocking ring 22 on the top plate 31. Alignment markings 222 on the ring may include a hole for receiving corresponding positioning projections on the top plate 31 allowing the ring 22 to be correctly positioned on the blocking plate 31. The alignment markings 222 may be further provided with a line marking following a reference axis to aid alignment.

After the optical lens member 10 has been placed on the blocking device 20, the operator may make an initial judgment as to the quality of the positioning by direct visualization of the sub-surface reference element 111 of the optical lens member 10 with respect to the reference markings of the blocking device 20 before continuing the blocking process. If the operator is not satisfied with the initial positioning, the optical lens member 10 may be repositioned manually or automatically on the blocking device 20. Once the operator is satisfied with the positioning the clamping arm 35 may be put in place to hold the optical lens member 10 in position on the blocking device 20.

The positioning of the optical lens member 10 on the blocking device 20 can then be quantified using the digital camera 36. In order to measure the positioning of the lens member 10, the sub-surface referencing elements 111 and the reference markings 211 and 222 provided on the blocking device 20 are viewed through the lens member 10 by means of the camera 36 of the blocking device 20 as illustrated in Figure 8.

The position and/or orientation of the referencing element may be measured by lighting the optical lens member through the external periphery surface and capturing an image of the lighted sub-surface referencing element, for example using the camera 36.

According to an embodiment of the invention, the deviation of the image of the sub-surface referencing element 111 located between the first and second faces of the lens member 10 due to refractive properties of the optical lens member 10 may be taken into account when making measurements of the position of the reference system relative to the blocker reference system.

These various steps can alternatively be performed automatically by machines rather by an operator.

Further to the blocking step, the method according to the invention may comprise a blocking position determining step S6.

During the blocking position determining step S6, the blocking position of the optical lens member is determined with respect to the blocker reference system using the sub-surface referencing element 111. Determining the actual blocking position may be used during the downstream steps of the manufacturing process of the optical lens.

For example the surface data use to manufacture the surface of the second face of the optical lens may be adapted according to the actual blocking position of the optical lens member.

Indeed, usually, the surface data are determined assuming that the optical lens member is perfectly positioned with respect to the blocker reference system. However a positioning error may occur during the blocking process. Advantageously, the method according to the invention allows determining the actual position of the optical lens member and the surface data can be adapted according to the difference between the actual position and the theoretical position of the optical lens member. The determination of the actual position is easy because it is based on a relative position measurement of shapes appearing on an image captured, through the lens member. Thus, the method according to the invention allows increasing the overall accuracy of the manufacturing process and the optical quality of the manufactured optical lenses.

The invention further relates to a method of manufacturing an optical lens. The method further comprises after the steps of the blocking method according to the invention:
- a surface data providing step during which surface data corresponding to the second optical surface to be manufactured on the second face of the optical lens member are provided,
- a manufacturing step during which the second optical surface of the optical lens member is manufactured according to the surface data.

As indicated previously, the surface data may have been adjusted based on the actual position of the optical lens, said actual position being determined using the sub-surface referencing element.

According to an aspect of the invention, both faces of the optical lens member may be manufactured, for example by digital surfacing technology. Thus the invention further relates to a method of manufacturing an optical lens comprising:
- a first optical surface manufacturing step during which the second optical face of the optical lens member is manufactured according to the invention, from a first optical lens blank; and
- a second optical surface manufacturing step during which the first optical face of said optical lens member is manufactured according to the invention.

During the first and second optical surface manufacturing steps, the same reference system identified by the sub-surface referencing element is used. Advantageously, the risk of shift between the surfaces of the first and second faces of the final ophthalmic lens is reduced. Thus, the overall quality of the manufacturing process can be increased.

While the foregoing examples have been described with reference to the manufacture of an ophthalmic lens, it will be appreciated that the method of the invention may be applied more generally to the manufacture of other types of optical lens, for example optical lens used in telescopes and the like.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of blocking an optical lens member (10), the method comprising:
- An optical lens member providing step during which an optical lens member is provided, the optical lens member comprising first (11) and second (12) faces connected by an external periphery surface (14), the optical lens member further comprises a reference system identified by at least one sub-surface referencing element (111) located between the first and second optical faces, wherein:
o the first face comprises a first optical surface having a surface design associated with the reference system,
o when an optical lens is manufactured from said optical lens member, said sub-surface referencing element remains at least partially on the optical lens as non-discernable;
∘ the referencing element is configured such that the position and/or orientation of the referencing element is measured by lighting the optical lens member through the external periphery surface,
- a taping step (S2) during which an adhesive tape is provided on the first face of the lens member,
- a blocker providing step (S3), during which a blocker with a blocker reference system is provided,
- an optical lens member positioning step (S4) during which the first face of the optical lens member is placed on the blocker and positioned in a blocking position with respect to the blocker reference system using the sub-surface referencing element, and
- a blocking step (S5) during which the optical lens member is blocked on the blocker in the blocking position.

2. The method according to claim 1, wherein the sub-surface referencing element is located in the periphery of the optical lens member so as to be removed when the optical lens is edged so as to be fit in a spectacle frame.

3. The method according to any of the preceding claims, wherein the sub-surface referencing element comprises a plurality of sub-surface markings, the sub-surface markings defining a plan.

4. The method according to any of the preceding claims, wherein the referencing element comprises sets of coplanar sub-surface markings each set of markings defining a different plan.

5. The method according to any of the preceding claims wherein the sub-surface referencing element comprises local modifications of the refractive index of the optical lens member.

6. The method according to any of the preceding claims, wherein the sub-surface referencing element comprises sub-surface markings.

7. The method according to the preceding claim, wherein the sub-surface markings are realized by using a pulsed laser source with pulse duration within femto-second range, wherein the light emitted by the pulsed laser source is focused within the optical lens member.

8. The method according to any of the preceding claims, wherein the second face comprises a second optical surface having a surface design associated with the reference system.

9. The method according to any of the preceding claims, wherein the method further comprises a blocking position determining step during which the blocking position of the optical lens member is determined with respect to the blocker reference system using the sub-surface referencing element,

10. The method according to any of the preceding claims, wherein the position and/or orientation of the referencing element is measured by lighting the optical lens member through the external periphery surface and capturing an image of the lighted sub-surface referencing element.

11. The method according to claim 10, wherein the referencing element is visualized through the second face of the lens member and wherein the refractive properties of the lens member are taken into account when determining the position and/or orientation of the referencing element.

12. A method of manufacturing an optical lens, the method comprising:
- the steps of the method according to any of the preceding claims,
- a surface data providing step during which surface data corresponding to the second optical surface to be manufactured on the second face of the optical lens member are provided,
- a manufacturing step during which the second optical surface of the optical lens member is manufactured according to the surface data.

13. A method of manufacturing an optical lens, the method comprising:
- a first optical surface manufacturing step during which the second optical face of the optical lens member is manufactured according to claim 12, from a first optical lens blank;
- a second optical surface manufacturing step during which the first optical face of said optical lens member is manufactured according to claim 12,
wherein during the first and second optical surface manufacturing steps, the same reference system identified by the sub-surface referencing element is used.

## Patentansprüche

1. Verfahren zum Blockieren eines optischen Linsenelements (10), wobei das Verfahren umfasst:
- einen Schritt des Bereitstellens eines optischen Linsenelements, während dem ein optisches Linsenelement bereitgestellt wird, wobei das optische Linsenelement eine erste (11) und eine zweite (12) Fläche umfasst, verbunden durch eine externe Peripherieoberfläche (14),
das optische Linsenelement weiter ein Referenzsystem umfasst, identifiziert durch mindestens ein unter der Oberfläche befindliches Referenzierelement (111) befindlich zwischen der ersten und zweiten optischen Fläche, wobei
∘ die erste Fläche eine erste optische Oberfläche mit einem mit dem Referenzsystem assoziierten Oberflächendesign umfasst,
∘ wenn eine optische Linse aus dem optischen Linsenelement hergestellt wird, das unter der Oberfläche befindliche Referenzierelement mindestens teilweise auf der optischen Linse als nicht-wahrnehmbar verbleibt;
∘ das Referenzierelement derart ausgelegt ist, dass die Position und/oder Orientierung des Referenzierelements gemessen wird durch Beleuchten des optischen Linsenelements durch die externe Peripherieoberfläche,
- einen Bandagierschritt (S2), während dem ein Klebeband auf der ersten Fläche des Linsenelements bereitgestellt wird,
- einen Blockiererbereitstellungsschritt (S3), während dem ein Blockierer mit einem Blockiererreferenzsystem bereitgestellt wird,
- einen Schritt (S4) des Positionierens des optischen Linsenelements, während dem die erste Fläche des optischen Linsenelements auf dem Blockierer platziert wird und in einer Blockierposition bezüglich des Blockiererreferenzsystems unter Verwendung des unter der Oberfläche befindlichen Referenzierelements positioniert wird, und
- einen Blockierschritt (S5), während dem das optische Linsenelement auf dem Blockierer in der Blockierposition blockiert wird.

2. Verfahren nach Anspruch 1, wobei sich das unter der Oberfläche befindliche Referenzierelement in der Peripherie des optischen Linsenelements befindet, um entfernt zu werden, wenn die optische Linse gerandet wird, um in einen Brillenrahmen eingepasst zu werden.

3. Verfahren nach einem der vorhergehenden Ansprüche, wobei das unter der Oberfläche befindliche Referenzierelement mehrere unter der Oberfläche befindliche Markierungen umfasst, wobei die unter der Oberfläche befindlichen Markierungen einen Plan definieren.

4. Verfahren nach einem der vorhergehenden Ansprüche, wobei das Referenzierelement Sätze von koplanaren, unter der Oberfläche befindlichen Markierungen umfasst, wobei jeder Satz von Markierungen einen anderen Plan definiert.

5. Verfahren nach einem der vorhergehenden Ansprüche, wobei das unter der Oberfläche befindliche Referenzierelement lokale Modifikationen des Brechungsindexes des optischen Linsenelements umfasst.

6. Verfahren nach einem der vorhergehenden Ansprüche, wobei das unter der Oberfläche befindliche Referenzierelement unter der Oberfläche befindliche Markierungen umfasst.

7. Verfahren nach dem vorhergehenden Anspruch, wobei die unter der Oberfläche befindlichen Markierungen unter Verwendung einer gepulsten Laserquelle mit einer Pulsdauer innerhalb des Femtosekundenbereichs realisiert werden, wobei das durch die gepulste Laserquelle emittierte Licht innerhalb des optischen Linsenelements fokussiert wird.

8. Verfahren nach einem der vorhergehenden Ansprüche, wobei die zweite Fläche eine zweite optische Oberfläche mit einem mit dem Referenzsystem assoziierten Oberflächendesign umfasst.

9. Verfahren nach einem der vorhergehenden Ansprüche, wobei das Verfahren weiter einen Blockierpositionsbestimmungsschritt umfasst, während dem die Blockierposition des optischen Linsenelements bezüglich des Blockierreferenzsystems unter Verwendung des unter der Oberfläche befindlichen Referenzierelements bestimmt wird.

10. Verfahren nach einem der vorhergehenden Ansprüche, wobei die Position und/oder Orientierung des Referenzierelements durch Beleuchtung des optischen Linsenelements durch die externe Peripherieoberfläche und Aufnehmen eines Bilds des beleuchteten, unter der Oberfläche befindlichen Referenzierelements gemessen werden.

11. Verfahren nach Anspruch 10, wobei das Referenzelement durch die zweite Fläche des Linsenelements visualisiert wird und wobei die refraktiven Eigenschaften des Linsenelements beim Bestimmen der Position und/oder Orientierung des Referenzierelements berücksichtig werden.

12. Verfahren zum Herstellen eines optischen Linse, wobei das Verfahren umfasst:
- die Schritte des Verfahrens nach einem der vorhergehenden Ansprüche,
- einen Oberflächendaten-Bereitstellungsschritt, während dem Oberflächendaten entsprechend der auf der zweiten Fläche des optischen Linsenelements herzustellenden zweiten optischen Oberfläche bereitgestellt werden,
- einen Herstellungsschritt, während dem die zweite optische Oberfläche des optischen Linsenelements gemäß den Oberflächendaten hergestellt wird.

13. Verfahren zum Herstellen einer optischen Linse, wobei das Verfahren umfasst:
- einen Erste-Optische-Oberfläche-Herstellungsschritt, während dem die zweite optische Fläche des optischen Linsenelements gemäß Anspruch 12 aus einem ersten optischen Linsenrohling hergestellt wird;
- einen Zweite-Optische-Oberfläche-Herstellungsschritt, während dem die erste optische Fläche des optischen Linsenelements gemäß Anspruch 12 hergestellt wird,
wobei während des Erste- und Zweite-Optische-Oberfläche-Herstellungsschritts das gleiche, durch das unter der Oberfläche befindliche Referenzierelement identifizierte Referenzsystem verwendet wird.

## Revendications

1. Procédé de blocage d'un élément de verre optique (10), le procédé comprenant :
- une étape d'obtention d'élément de verre optique pendant laquelle un élément de verre optique est obtenu, l'élément de verre optique comprenant des première (11) et deuxième (12) faces reliées par une surface périphérique externe (14), l'élément de verre optique comprenant en outre un système de référence identifié par au moins un élément de référencement subsurfacique (111) situé entre les première et deuxième faces optiques, dans lequel :
o la première face comprend une première surface optique ayant une conception de surface associée au système de référence,
o quand un verre optique est fabriqué à partir dudit élément de verre optique, ledit élément de référencement subsurfacique reste au moins partiellement sur le verre optique comme non perceptible,
o l'élément de référencement est configuré de telle sorte que la position et/ou l'orientation de l'élément de référencement sont mesurées par éclairage de l'élément de verre optique à travers la surface périphérique externe,
- une étape de rubanage (S2) pendant laquelle un ruban adhésif est appliqué sur la première face de l'élément de verre,
- une étape d'obtention de dispositif de blocage (S3), pendant laquelle un dispositif de blocage avec un système de référence de dispositif de blocage est obtenu,
- une étape de positionnement d'élément de verre optique (S4) pendant laquelle la première face de l'élément de verre optique est placée sur le dispositif de blocage et positionnée dans une position de blocage par rapport au système de référence de dispositif de blocage au moyen de l'élément de référencement subsurfacique, et
- une étape de blocage (S5) pendant laquelle l'élément de verre optique est bloqué sur le dispositif de blocage dans la position de blocage.

2. Procédé selon la revendication 1, dans lequel l'élément de référencement subsurfacique est situé dans la périphérie de l'élément de verre optique de manière à être retiré quand le verre optique est détouré de manière à être ajusté dans une monture de lunettes.

3. Procédé selon l'une quelconque des revendications précédentes, dans lequel l'élément de référencement subsurfacique comprend une pluralité de marques subsurfaciques, les marques subsurfaciques définissant un plan.

4. Procédé selon l'une quelconque des revendications précédentes, dans lequel l'élément de référencement comprend des ensembles de marques subsurfaciques coplanaires, chaque ensemble de marques définissant un plan différent.

5. Procédé selon l'une quelconque des revendications précédentes dans lequel l'élément de référencement subsurfacique comprend des modifications locales de l'indice de réfraction de l'élément de verre optique.

6. Procédé selon l'une quelconque des revendications précédentes, dans lequel l'élément de référencement subsurfacique comprend des marques subsurfaciques.

7. Procédé selon la revendication précédente, dans lequel les marques subsurfaciques sont réalisées au moyen d'une source laser puisée avec une durée d'impulsion dans la gamme des femtosecondes, la lumière émise par la source laser pulsée étant focalisée à l'intérieur de l'élément de verre optique.

8. Procédé selon l'une quelconque des revendications précédentes, dans lequel la deuxième face comprend une deuxième surface optique ayant une conception de surface associée au système de référence.

9. Procédé selon l'une quelconque des revendications précédentes, le procédé comprenant en outre une étape de détermination de position de blocage pendant laquelle la position de blocage de l'élément de verre optique est déterminée par rapport au système de référence de dispositif de blocage au moyen de l'élément de référencement subsurfacique.

10. Procédé selon l'une quelconque des revendications précédentes, dans lequel la position et/ou l'orientation de l'élément de référencement sont mesurées par éclairage de l'élément de verre optique à travers la surface périphérique externe et capture d'une image de l'élément de référencement subsurfacique éclairé.

11. Procédé selon la revendication 10, dans lequel l'élément de référencement est visualisé à travers la deuxième face de l'élément de verre et dans lequel les propriétés réfractives de l'élément de verre sont prises en compte lors de la détermination de la position et/ou de l'orientation de l'élément de référencement.

12. Procédé de fabrication d'un verre optique, le procédé comprenant :
- les étapes du procédé selon l'une quelconque des revendications précédentes,
- une étape d'obtention de données de surface pendant laquelle des données de surface correspondant à la deuxième surface optique devant être fabriquée sur la deuxième face de l'élément de verre optique sont obtenues,
- une étape de fabrication pendant laquelle la deuxième surface optique de l'élément de verre optique est fabriquée en fonction des données de surface.

13. Procédé de fabrication d'un verre optique, le procédé comprenant :
- une première étape de fabrication de surface optique pendant laquelle la deuxième face optique de l'élément de verre optique est fabriquée selon la revendication 12, à partir d'une première ébauche de verre optique,
- une deuxième étape de fabrication de surface optique pendant laquelle la première face optique dudit élément de verre optique est fabriquée selon la revendication 12,
dans lequel, pendant les première et deuxième étapes de fabrication de surface optique, le même système de référence identifié par l'élément de référencement subsurfacique est utilisé.
